(19) Europäisches Patentamt / European Patent Office / Office européen des brevets

(11) **EP 4 574 780 B1**

(12) **EUROPEAN PATENT SPECIFICATION**

(45) Date of publication and mention
of the grant of the patent:
**04.02.2026 Bulletin 2026/06**

(21) Application number: **23219626.1**

(22) Date of filing: **22.12.2023**

(51) International Patent Classification (IPC):
**C03B 17/04** $^{(2006.01)}$

(52) Cooperative Patent Classification (CPC):
**C03B 17/04**

(54) **DRAWING HEAD FOR PRODUCING A GLASS TUBE AND PROCESS FOR PRODUCING A GLASS TUBE VIA A DRAWING PROCESS**

ZIEHKOPF ZUR HERSTELLUNG EINES GLASROHRS UND VERFAHREN ZUR HERSTELLUNG EINES GLASROHRS DURCH EIN ZIEHVERFAHREN

TÊTE D'ÉTIRAGE POUR LA FABRICATION D'UN TUBE EN VERRE ET PROCÉDÉ DE FABRICATION D'UN TUBE EN VERRE PAR UN PROCÉDÉ D'ÉTIRAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietor: **SCHOTT AG**
**55122 Mainz (DE)**

(72) Inventors:
• **TRINKS, Volker**
**95666 Mitterteich (DE)**
• **LANGE, Ulrich**
**55122 Mainz (DE)**

(74) Representative: **Schott Corporate IP**
**Hattenbergstraße 10**
**55122 Mainz (DE)**

(56) References cited:
**CN-A- 110 255 864      DE-C1- 10 127 142**

**Description**

This disclosure relates to a drawing head for producing a glass tube and an apparatus comprising the drawing head. This disclosure further relates to a process for producing a glass tube via a drawing process. The geometry and dimensions of the drawing head are designed in such a way that no streaks impairing the quality of the glass tubes are formed in a process according to this disclosure.

Background

The Vello process is known for the production of glass tubes. It is a vertical drawing process in which the viscous glass melt is drawn off downward through a ring die. The glass melt is fed from a melting tank via a feeder channel or duct. At the end of the feeder channel, there is a cylindrical opening at the bottom with a nozzle through which the melt can flow out via a vertical cone, also called a drawing needle, which is adjustable in height and laterally and widens downward in the shape of a funnel. The cone is hollow and is connected to blowing air via an extension tube. As a result, the glass mass flowing around the valve body is kept open and can be drawn off as a glass tube downwards into a temperature-controlled shaft before it is deflected in freely suspended fashion or with the aid of a guide into a horizontal direction and drawn off by a drawing machine.

The down-draw process, which is also commonly used, is similar, with the difference that the formed glass tube is not deflected horizontally but is drawn off directly vertically downwards.

The end section of the feeder channel with the opening through which the glass melt is drawn off as a glass tube is often called the feeder head or drawing head. The above-mentioned vertical cone, i.e., the drawing needle, can be used to close the glass outlet of a drawing head which is intended for drawing glass tubes. The drawing needle is held and moved by a cylindrical extension, i.e., the needle shaft. The needle shaft protrudes from the drawing head at the upper open end. Before the glass melt leaves the drawing head via the glass outlet, it flows around the shank of the drawing needle, forming a so-called looping streak in the glass melt. A streak which may form in the glass is a chemical inhomogeneity that has a slightly different refractive index which differs from the base glass. A strongly pronounced streak can be seen with the naked eye, especially if the streak is located on the glass surface. It is also possible to make streaks visible in micrographs taken from cut cross sections of the glass tube.

DE 10 2008 009 811 A1 discloses a method for controlling and monitoring the temperature in the manufacture of glass tubes using the Vello or down-draw process. In this method a glass melt is introduced into a glass tube needle cell and metered through a nozzle ring onto a metering-drawing needle, wherein the metering-drawing needle is heated with its conical glass tube forming body. The wall of the metering-drawing needle with the connected glass tubular forming body consists of an electrically conductive material, wherein the heating is effected by current flow in the electrically conductive wall material. DE 10 2008 009 811 A1 also discloses a related device for controlling and monitoring the temperature in the manufacture of glass tubes using the Vello or down-draw process. Both the method and the device allow preventing devitrification which would manifest itself in the form of streaks on the glass tubes.

US 2017/0320766 A1 discloses bell assembly apparatuses with enhanced thermal dimensional stability that provide reduced siding loss during the production of glass tubing, and glass tubing forming apparatuses which incorporate bell assembly apparatuses with enhanced thermal dimensional stability such that undesired movement of bells within delivery orifices of glass delivery tanks due to thermal variation across the bell assembly apparatuses during glass tubing production is reduced.

US 2017/0341966 A1 discloses heating apparatuses and methods for glass tubing manufacturing. The heating apparatus includes a bowl configured to receive molten glass and a plurality of heating elements thermally coupled to the bowl, wherein the bowl includes a tub portion configured to hold the molten glass, a bowl well extending beneath the tub portion, and an orifice at a distal end of the bowl well. The plurality of heating elements include a first heating element disposed at a first vertical location along the bowl height, a second heating element disposed at a second vertical location along the bowl height, wherein the first vertical location is vertically spaced apart from the second vertical location. The heating apparatus is used to heat the molten glass as the molten glass flows from the tub portion through the bowl well and out of the orifice. The heating apparatus is configured to maintain thermal homogeneity of the molten glass exiting the orifice which mitigates variation in tube dimensions and instability in the glass tube manufacturing process.

CN110255864 A refers to an overflow down-draw glass tube forming device, which aims at solving the problem of how to produce glass tubes with small thickness variation. The overflow down-draw glass tube forming device comprises an annular supply tank, a column-like core and an outer overflow disc or an inner overflow disc. By providing a coaxial column-like core in the annular supply tank, an annular cavity accommodating the glass melt is formed between the column-like core and the upper tank, and a split channel is formed between the column-like core and the lower tank.

DE10127142 C1 refers to a sleeve type agitator for a glass melt with openings or small loops in its outer surface. The sleeve type agitator is arranged vertically in a glass melt feed channel in a glass melt feed system for making glass tubes or pipes according to the Vello or down-drawn process.

A streak propensity of the glass undergoes a particular orientation as a result of the glass melt flowing around the needle shaft and is therefore visible as a looping streak. In the prior art it has been assumed that the looping streak is formed within the drawing head due to rejoining glass melt portions after passing the needle shaft in a stationary area and manifests itself as a streak in the manufactured glass tubes at a relatively stationary position with respect to their position relative to the forming components. If a glass tube is marked in such a way that its position can be traced as it flows out of the drawing head, the streak is found on a side of the glass tube surface which is opposite to the side of the glass inlet flow as it leaves the head. It was previously speculated that streaks forming on the surface of a drawn glass tube may be prevented by using a laterally positioned head overflow to draw off the affected portion of glass melt. This approach was however insufficient to sufficiently avoid the formation of streaks on the glass tube surface.

Drawing glass tubes with the known drawing heads, a so-called head overflow is used to suppress the formation of a looping streak in the glass melt and to thus prevent or at least mitigate the formation of streaks on the surface of the manufactured glass tubes. The glass melt drawn off via the head overflow is thereby no longer available for product manufacture, which reduces the overall yield and increases production costs.

The object of the present disclosure is to provide an apparatus and a method for increased prevention of the formation of visible streaks during the manufacture of a glass tube.

Summary of the Disclosure

The described object is solved by the subject-matter defined in the claims.

In one aspect, this disclosure provides a drawing head (1) for producing a glass tube as defined in claim 1, wherein the drawing head (1) comprises a glass inlet (2) for receiving a glass melt and a glass outlet (4) for discharging the glass melt, the drawing head (1) having a total height h and an inner diameter d, characterized by one or more of the following features:

- the drawing head (1) further comprising a head overflow (5), wherein a central axis of the head overflow (5) is arranged vertically above a central axis of the glass inlet (2) by a vertical distance $v$, characterized in that a ratio $v/h$ is at least 0.05/1, or at least 0.1/1;
- the drawing head (1) having a vertical distance c between the glass outlet (4) and a central axis of the glass inlet (2), characterized in that a ratio $c/h$ is from 0.2/1 to 0.8/1, more preferably the ratio $c/h$ is from 0.4/1 to 0.6/1 or alternatively from 0.2/1 to 0.4/1.

In one embodiment, a process for producing a glass tube via a drawing process is disclosed as defined in claim 11, comprising the step of passing a glass melt through an apparatus according to this disclosure, wherein the process optionally comprises a subsequent hot forming step, wherein the drawing head (1) has a filling height of the glass melt $h_{melt}$ between a glass melt level (6) and a central axis of the glass inlet (2), when in operation, characterized in that a ratio $h_{melt}/h$ is at least 0.1/1, or at least 0.2/1. Filling height of the glass melt $h_{melt}$ being the distance between the glass melt level (6) and the central axis of the glass inlet (2). In other words, the drawing head being configured to have a filling height of the glass melt $h_{melt}$, i.e. a distance between a glass melt level (6) and a central axis of the glass inlet (2), when in operation, characterized in that a ratio $h_{melt}/h$ is at least 0.1/1, or at least 0.2/1.

In a first aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter d, the drawing head (1) further comprising a head overflow (5), wherein a central axis of the head overflow (5) is arranged vertically above a central axis of the glass inlet (2) by a vertical distance $v$, characterized in that a ratio $v/h$ is at least 0.05/1, or at least 0.1/1.

In a second aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter $d$, the drawing head (1) having a vertical distance c between the glass outlet (4) and a central axis of the glass inlet (2), characterized in that a ratio $c/h$ is from 0.2/1 to 0.8/1, more preferably the ratio $c/h$ is from 0.4/1 to 0.6/1 or alternatively from 0.2/1 to 0.4/1.

In another aspect, as defined in claim 8, this disclosure provides an apparatus for producing a glass tube comprising a drawing head (1) according to this disclosure and a drawing needle (3).

In a related aspect as defined in claim 10, this disclosure provides a process for producing a glass tube via a drawing process, comprising the step of passing a glass melt through an apparatus according to this disclosure, wherein the process optionally comprises a subsequent hot forming step.

Surprisingly, it was found that adaptations in the geometrical design of the drawing head can influence the convectional flow within the glass melt, with the result that the looping streak is no longer visible as a streak on the product. This result was also found at a greatly reduced glass discharge at the head overflow or without operating the head overflow. In the drawing heads according to this disclosure, the flow of the glass melt in the drawing head is changed in such a way that the streak is displaced into the manufactured product, which is thus no longer present on the surface and is no longer visible on the product.

## Detailed Description of the Disclosure

### Drawing head

In a first aspect, this disclosure provides a drawing head for producing a glass tube, wherein the drawing head comprises a glass inlet for receiving a glass melt and a glass outlet for discharging the glass melt, the drawing head having a total height $h$ and an inner diameter $d$, the drawing head further comprising a head overflow, wherein a central axis of the head overflow is arranged vertically above a central axis of the glass inlet by a vertical distance v, characterized in that a ratio $v/h$ is at least 0.05/1, or at least 0.1/1.

In a second aspect, this disclosure provides a drawing head for producing a glass tube, wherein the drawing head comprises a glass inlet for receiving a glass melt and a glass outlet for discharging the glass melt, the drawing head having a total height $h$ and an inner diameter $d$, the drawing head having a vertical distance c between the glass outlet and a central axis of the glass inlet, characterized in that a ratio $c/h$ is from 0.2/1 to 0.8/1, more preferably the ratio $c/h$ is from 0.4/1 to 0.6/1 or alternatively from 0.2/1 to 0.4/1.

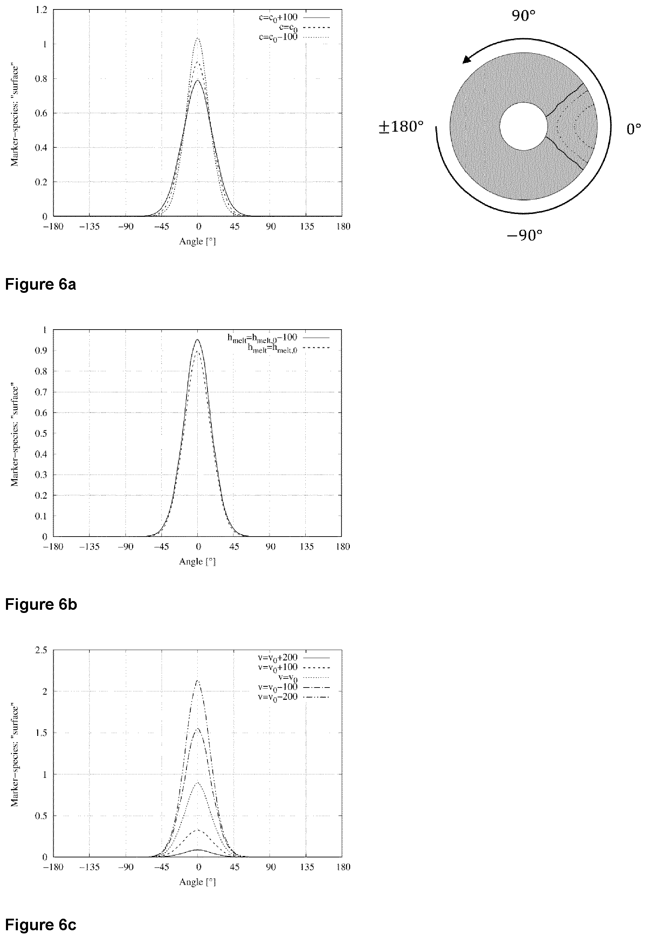

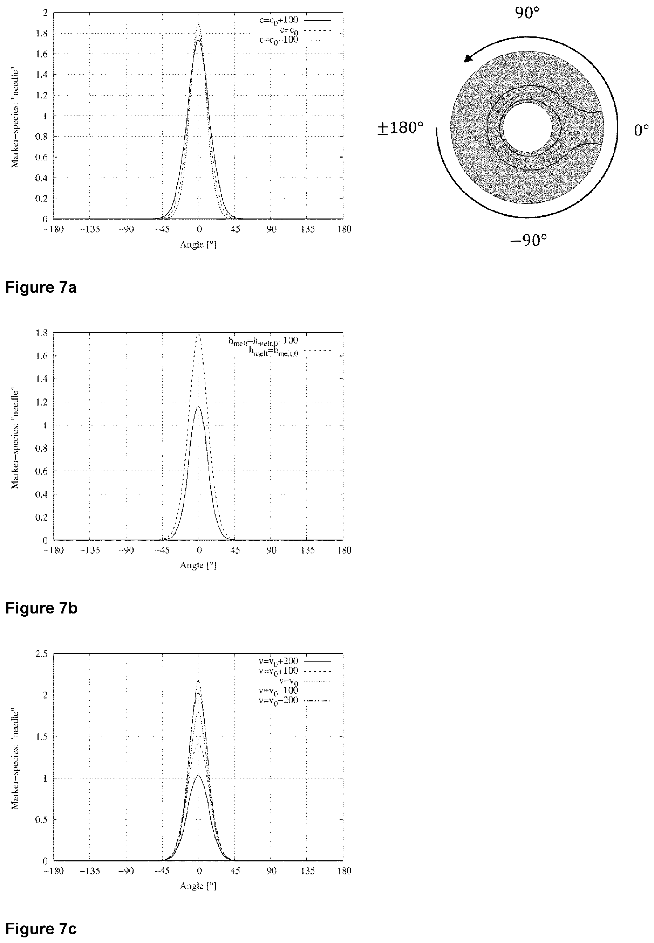

Without being bound by theory, by means of simulations (cf. Figure 6c and Figure 7c) it has been found that the presence of a head overflow which is arranged vertically above a central axis of the glass inlet by a vertical distance $v$ with a ratio $v/h$ of at least 0.05/1 reduces or even completely avoids the formation of visible streaks during the manufacture of a glass tube.

Without being bound by theory, by means of simulations (cf. Figure 6a and Figure 7a) it has been found that the position of the glass inlet with respect to the total height h of the drawing head has an influence on reducing and/or avoiding the formation of visible streaks during the manufacture of a glass tube, when the vertical distance c satisfies a ratio c/h from 0.2/1 to 0.8/1.

Without being bound by theory, by means of simulations (cf. Figure 6b and Figure 7b) it has been found that a filling height of the glass melt $h_{melt}$ between the glass melt level and the central axis of the glass inlet, when in operation, contributes to reducing and/or avoiding the formation of visible streaks during the manufacture of a glass tube, provided that a ratio $h_{melt}/h$ is at least 0.1/1.

The described features relating the ratio $v/h$ of at least 0.05/1 and the ratio $c/h$ from 0.2/1 to 0.8/1 may each be realised alone or in any combination with each other to reduce and/or avoid the formation of visible streaks during the manufacture of a glass tube. The described process feature relating to the ratio $h_{melt}/h$ of at least 0.1/1 may be realized in any combination with the described features of the drawing head. It shall be understood that that the lower limit of the ratio $v/h$, the range for the ratio $c/h$, and and the lower limit of the ratio $h_{melt}/h$ shall not be interpreted in a way that leads to physically non-sensible geometric constraints on the drawing head.

In one embodiment, the ratio $v/h$ is at least 0.05/1, or at least 0.075/1, or at least 0.1/1, or at least 0.125/1, or at least 0.15/1. In one embodiment, the ratio $v/h$ is 0.3/1 or less, or 0.275/1 or less, or 0.25/1 or less, or 0.225/1 or less, or 0.2/1 or less. In one embodiment, the ratio $v/h$ is from 0.05/1 to 0.3/1, or from 0.075/1 to 0.275/1, or from 0.1/1 to 0.25/1, or from 0.125/1 to 0.225/1, or from 0.15/1 to 0.2/1.

In one embodiment, the ratio $c/h$ is from 0.2/1 to 0.8/1, more preferably the ratio $c/h$ is from 0.4/1 to 0.6/1, or alternatively from 0.2/1 to 0.4/1. In one embodiment, the ratio $c/h$ is from 0.4/1 to 0.6/1, or from 0.425/1 to 0.575/1, or from 0.45/1 to 0.55/1, or from 0.475/1 to 0.525/1. In one embodiment, the ratio $c/h$ is from 0.2/1 to 0.4/1, or from 0.225/1 to 0.375/1, or from 0.25/1 to 0.35/1, or from 0.275/1 to 0.325/1. In one embodiment, the ratio $c/h$ is 0.2/1 or more, or 0.225/1 or more, or 0.25/1 or more, or 0.275/1 or more, or 0.3/1 or more, or 0.325/1 or more, or 0.35/1 or more, or 0.375/1 or more, or 0.4/1 or more, or 0.425/1 or more, or 0.45/1 or more, or 0.475/1 or more. In one embodiment, the ratio c/h is 0.8/1 or less, or 0.7/1 or less, or 0.6/1 or less, or 0.575/1 or less, or 0.55/1 or less, or 0.525/1 or less, or 0.5/1 or less, or 0.475/1 or less, or 0.45/1 or less, or 0.425/1 or less, or 0.4/1 or less, or 0.375/1 or less, or 0.35/1 or less, or 0.325/1 or less.

In one embodiment, the ratio $h_{melt}/h$ is at least 0.1/1, or at least 0.15/1, or at least 0.2/1, or at least 0.25/1, or at least 0.3/1, or at least 0.35/1, or at least 0.4/1. In one embodiment, the ratio $h_{melt}/h$ is 0.7/1 or less, or 0.65/1 or less, or 0.6/1 or less, or 0.55/1 or less, or 0.5/1 or less, or 0.45/1 or less, or 0.4/1 or less. In one embodiment, the ratio $h_{melt}/h$ is from 0.1/1 to 0.7/1, or 0.15/1 to 0.65/1, or from 0.2/1 to 0.6/1, or 0.25/1 to 0.55/1, or from 0.3/1 to 0.5/1, or 0.35/1 to 0.45/1. In an alternative embodiment, the ratio $h_{melt}/h$ is from 0.1/1 to 0.5/1, or from 0.15/1 to 0.45/1, or from 0.2/1 to 0.4/1, or from 0.25/1 to 0.35/1.

In one embodiment, the ratio $h/d$ is from 2/1 to 7/1, or from 2.5/1 to 6.5/1, or from 3/1 to 6/1, or from 3.5/1 to 5.5/1. In one embodiment, the ratio $h/d$ is from 3/1 to 4.5/1. In one embodiment, the ratio $h/d$ is 2/1 or more, or 2.5/1 or more, or 3/1 or more, or 3.5/1 or more. In one embodiment, the ratio $h/d$ is 7/1 or less, or 6.5/1 or less, or 6/1 or less, or 5.5/1 or less, or 5/1 or less, or 4.5/1 or less.

In one embodiment, the ratio $d_{i,inlet}/d_{i,overflow}$ is between 5/1 and 1.5/1, or between 4/1 and 1.75/1, or between 3/1 and 2/1. In one embodiment, the ratio $d_{i,inlet}/d_{i,overflow}$ is from 5/1 to 1.5/1, or from 4/1 to 1.75/1, or from 3/1 to 2/1. In one embodiment, the ratio $d_{i,inlet}/d_{i,overflow}$ is 1.5/1 or more, or 1.75/1 or more, or 2.0/1 or more. In one embodiment, the ratio $d_{i,inlet}/d_{i,overflow}$ is 5/1 or less, or 4/1 or less, or 3/1 or less.

In one embodiment, the inner diameter of the glass inlet $d_{i,inlet}$ is from 100 mm to 250 mm, or from 110 mm to 240 mm, or from 120 mm to 230 mm. In one embodiment, the inner diameter of the glass inlet $d_{i,inlet}$ is 100 mm or more, or 110 mm or more, or 120 mm or more. In one embodiment, the inner diameter of the glass inlet $d_{i,inlet}$ is 250 mm or less, or 240 mm or less, or 230 mm or less.

In one embodiment, the inner diameter of the head overflow $d_{i,overflow}$ is from 30 mm to 100 mm, or from 40 mm to 90 mm, or from 50 mm to 80 mm, or from 60 mm to 80 mm, or from 70 mm to 80 mm. In one embodiment, the inner diameter of the head overflow $d_{i,overflow}$ is 30 mm or more, or 40 mm or more, or 50 mm or more, or 60 mm or more, or 70 mm or more. In one embodiment, the inner diameter of the head overflow $d_{i,overflow}$ is 100 mm or less, or 90 mm or less, or 80 mm or less.

In one embodiment, the inner diameter $d$ is between 120 and 400 mm, or between 135 and 350 mm, or between 150 and 300 mm. In one embodiment, the inner diameter $d$ is from 120 to 400 mm, or from 135 to 350 mm, or from 150 to 300 mm. In one embodiment, the inner diameter $d$ is 120 mm or more, or 135 mm or more, or 150 mm or more. In one embodiment, the inner diameter $d$ is 400 mm or less, or 350 mm or less, or 300 mm or less.

In one embodiment, the total height $h$ of the drawing head is from 600 mm to 1100, or from 700 mm to 1000, or from 800 mm to 950. In alternative embodiments, the total height $h$ of the drawing head is from 600 mm to 900 mm, or from 700 mm to 1100 mm. In one embodiment, the total height $h$ of the drawing head is 600 mm or more, or 700 mm or more, or 800 mm or more. In one embodiment, the total height h of the drawing head is 1100 mm or less, or 1000 mm or less, or 950 mm or less.

In one embodiment, the vertical distance c is from 150 mm to 700 mm, or from 200 mm to 600 mm, or from 300 mm to 550 mm. In alternative embodiments, the vertical distance c is from 150 mm to 300 mm, or from 350 mm to 550 mm. In one embodiment, the vertical distance c is 150 mm or more, or 200 mm or more, or 250 mm or more, or 300 mm or more, or 350 mm or more. In one embodiment, the vertical distance c is 700 mm or less, or 600 mm or less, or 550 mm or less, or 300 mm or less.

In one embodiment, the vertical distance v is at least 35 mm, or at least 50 mm, or at least 75 mm, or at least 100 mm, or at least 125 mm, or at least 150 mm. In one embodiment, the vertical distance v is 300 mm or less, or 275 mm or less, 250 mm or less, or 225 mm or less, or 200 mm or less. In one embodiment, the vertical distance v is from 35 mm to 300 mm, or from 50 mm to 275 mm, or from 75 mm to 250 mm, or from 100 mm to 225 mm, or from 125 mm to 200 mm, or from 150 mm to 200 mm.

Noble metal lining of the drawing head

In one embodiment, the drawing head further comprises an inner wall. In one embodiment, the inner wall of the drawing head, which during use contacts a glass melt, may at least partially comprise a noble metal lining. In one embodiment, the noble metal lining can comprise platinum or a platinum alloy, e.g., a platinum-iridium alloy or a platinum-rhodium alloy. In one embodiment, the inner wall of the drawing head, can be provided completely or at least partially with a noble metal lining at the surface areas which come into contact with the glass melt. Platinum sheets or sheets made of platinum alloys are suitable as a noble metal lining for this purpose. On the one hand this means prevents contact between the glass melt and the material of the inner wall of the drawing head, which is commonly made of refractory materials. On the other hand contamination of the glass melt is thereby avoided. Additionally, the lifespan of the drawing head comprising a noble metal lining is increased.

In one embodiment, the noble metal lining has a thickness of 0.5 mm to 2 mm, or 0.8 mm to 1.2 mm. In one embodiment, the noble metal lining comprises or consist of platinum or a platinum alloy, wherein the platinum or platinum alloy has a thickness of 0.8 mm to 1.2 mm.

In one embodiment, the noble metal lining can comprise connections for electrical heating and may be directly heated using an electrical current flowing through the noble metal lining. In one embodiment, the noble metal lining may be divided into segments which may be heated and controlled separately, resulting in the following advantages:

1. The heating may be divided into individual zones and can thus be controlled zonally and very precisely.

2. The implementation of rapid temperature changes is possible.

3. Temperatures can be changed rapidly over a wide temperature range spanning several hundred degrees centigrade.

4. Replacement of the drawing head or drawing head tools is possible within a few hours.

The drawing head according to this disclosure can be particularly preferable for processing aluminosilicate glasses and borosilicate glasses, which are melted at very high temperatures and thus require high effort and high costs. The drawing head according to this disclosure can achieve an increase in the directly usable glass melt quantity by approximately one fifth to one quarter which makes a process for producing a glass tube via a drawing process using the apparatus according to this disclosure very economical.

The drawing head according to this disclosure may be embedded in a steel construction which is further mounted in and surrounded by insulating brick. Mounting the drawing head in insulating brick is advantageous and avoids short circuits during electrical heating.

Further embodiments

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, the drawing head further comprising a head overflow, wherein a central axis of the head overflow is arranged vertically above a central axis of the glass inlet by a vertical distance $v$, characterized in that a ratio $v/h$ is from 0.05/1 to 0.3/1, or from 0.1/1 to 0.25/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance c between the glass outlet and a central axis of the glass inlet, with a ratio $c/h$ from 0.4/1 to 0.6/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance c between the glass outlet and a central axis of the glass inlet, with a ratio $c/h$ from 0.2/1 to 0.4/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter d, the drawing head further comprising a head overflow, wherein a central axis of the head overflow is arranged vertically above a central axis of the glass inlet by a vertical distance $v$, characterized in that a ratio $v/h$ is from 0.05/1 to 0.3/1, wherein the drawing head has a vertical distance c between the glass outlet and a central axis of the glass inlet, with a ratio $c/h$ from 0.4/1 to 0.6/1, or alternatively a ratio $c/h$ from 0.2/1 to 0.4/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance $c$ between the glass outlet and a central axis of the glass inlet, wherein the total height $h$ is from 600 mm to 1100, wherein the inner diameter $d$ is between 120 and 400 mm, and wherein the vertical distance c is from 150 mm to 700 mm, wherein the drawing head optionally comprises a head overflow with a ratio $v/h$ from 0.05/1 to 0.3/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance c between the glass outlet and a central axis of the glass inlet, wherein the total height $h$ is from 700 mm to 1000, wherein the inner diameter $d$ is between 120 and 400 mm, and wherein the vertical distance $c$ is from 150 mm to 700 mm, wherein the drawing head optionally comprises a head overflow with a ratio $v/h$ from 0.05/1 to 0.3/1.

In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance c between the glass outlet and a central axis of the glass inlet, wherein the total height $h$ is from 600 mm to 1100, wherein the inner diameter d is between 150 and 300 mm, and wherein the vertical distance c is from 150 mm to 700 mm, wherein the drawing head optionally comprises a head overflow with a ratio $v/h$ from 0.05/1 to 0.3/1.

(4) In one embodiment, this disclosure provides a drawing head for producing a glass tube, wherein the drawing head comprises a glass inlet for receiving a glass melt and a glass outlet for discharging the glass melt, the drawing head having a total height $h$ and an inner diameter $d$, wherein the drawing head has a vertical distance c between the glass outlet and a central axis of the glass inlet, wherein the total height $h$ is from 600 mm to 1100, wherein the inner diameter $d$ is between 120 and 400 mm, and wherein the vertical distance c is from 150 mm to 300 mm, or the vertical distance c is from 350 mm to 550 mm, wherein the drawing head optionally comprises a head overflow with a ratio $v/h$ from 0.05/1 to 0.3/1.

## Apparatus

In a fourth aspect, this disclosure provides an apparatus for producing a glass tube comprising a drawing head according to this disclosure and a drawing needle.

In one embodiment of the apparatus, a distance a between the drawing needle and an inner wall of the drawing head is in the range from 40 to 300 mm, more preferably the distance a is in the range from 50 to 150 mm. In one embodiment, the distance a is 40 mm or more, or 50 mm or more, or 60 mm or more, or 70 mm or more, or 80 mm or more. In one embodiment, the distance a is 300 mm or less, or 150 mm or less, or 140 mm or less, or 130 mm or less, or 100 mm or less.

In this disclosure, the distance a between the drawing needle and an inner wall can be understood as a position-dependent distance between any point on the surface of the needle shaft and the inner wall, which distance is measured within a horizontal plane and in a radial direction emanating from the horizontal axis of rotation of the needle shaft. The needle shaft may be oriented such that its axis of rotation is shifted with respect to the rotational axis of the drawing head which provides that the position-dependent distance a between the drawing needle and an inner wall may result in a sinusoidal functional behaviour along the outer circumference of the drawing needle. It may be advantageous to position the needle shaft such that its axis of rotation is shifted with respect to the rotational axis of the drawing head in order to account for and/or mitigate viscosity differences within the glass melt. In one embodiment, the needle shaft can be oriented such that its axis of rotation is congruent to the rotational axis of the drawing head.

In one embodiment, the drawing needle has a shaft diameter s from 30 mm to 70 mm, or from 40 mm to 60 mm, or from 45 mm to 55 mm.

## Process

In a related aspect, this disclosure provides a process for producing a glass tube via a drawing process, comprising the step of passing a glass melt through an apparatus according to this disclosure, wherein the process optionally comprises a subsequent hot forming step.

In one embodiment of the process, the drawing head comprises a head overflow, characterized in that an amount of glass melt drawn off via the head overflow is less than 10%, preferably less than 5%, of the amount of glass melt fed into the drawing head via the glass inlet. In one embodiment, the amount of glass melt drawn off via the head overflow is 0% or more, or 0.5% or more, or 1.0% or more, or 2.0% or more. In one embodiment, the amount of glass melt drawn off via the head overflow is from 0% to 10%, or from 0.5% to 10%, or from 1.0% to 5%, or from 2.0% to 5%. The process according to this disclosure may be controlled in such a way to draw off glass melt via the head overflow, if present, which may contribute to reducing and/or avoiding the formation of visible streaks during the manufacture of a glass tube. The amount of glass melt drawn off via the head overflow may be advantageously adjusted in combination with the geometric parameters of the apparatus according to this disclosure.

In one embodiment of the process, the amount of glass melt discharged via the glass outlet for drawing glass tubes is substantially equal to an amount of glass melt received via the glass inlet. It is of advantage to control the process in such a way to strongly reduce or even avoid the loss of glass melt. In certain embodiments, the presence of a head overflow is either not necessary, or the amount of glass melt drawn off via the head overflow is near 0%.

In one embodiment of the process, a process temperature of the glass melt in the drawing head is substantially set, preferably controlled, by electrical heating of the noble metal lining of the drawing head. Because the noble metal lining of the drawing head is based on an electrically conductive material, whereas the mounting of the drawing head in insulating brick avoids short circuits, electrical heating becomes possible. Because the glass melt is essentially entirely surrounded by the drawing head, effective and homogenous electrical heating may be provided.

In one embodiment of the process, a filling height of the glass melt $h_{melt}$ between a glass melt level and a central axis of the glass inlet has a ratio $h_{melt}/h$ of at least 0.1/1, or at least 0.2/1.

In one embodiment of the process, a filling height of the glass melt $h_{melt}$ between a glass melt level and a central axis of the glass inlet has a ratio $h_{melt}/h$ of at least 0.1/1, or at least 0.2/1, with the proviso that the glass melt level is between $h$ - 100 mm and $h$, with respect to the total height $h$ of the drawing head.

In one embodiment of the process, the ratio $h_{melt}/h$ is at least 0.1/1, or at least 0.15/1, or at least 0.2/1, or at least 0.25/1, or at least 0.3/1, or at least 0.35/1, or at least 0.4/1. In one embodiment of the process, the ratio $h_{melt}/h$ is 0.7/1 or less, or 0.65/1 or less, or 0.6/1 or less, or 0.55/1 or less, or 0.5/1 or less, or 0.45/1 or less, or 0.4/1 or less. In one embodiment of the process, the ratio $h_{melt}/h$ is from 0.1/1 to 0.7/1, or 0.15/1 to 0.65/1, or from 0.2/1 to 0.6/1, or 0.25/1 to 0.55/1, or from 0.3/1 to 0.5/1, or 0.35/1 to 0.45/1. In an alternative embodiment of the process, the ratio $h_{melt}/h$ is from 0.1/1 to 0.5/1, or from 0.15/1 to 0.45/1, or from 0.2/1 to 0.4/1, or from 0.25/1 to 0.35/1.

## Brief Description of the Figures

Figure 1 shows a drawing head according to this disclosure.

Figure 2a shows the formation and position of streaks in conventionally manufactured glass tubes.

Figure 2b shows the formation and position of streaks in glass tubes manufactured according to this disclosure.

Figure 3a and Figure 3b show the simulated residence time of the glass melt (in minutes) in a drawing head according to this disclosure for, respectively, a mirror plane in the x-z direction, and the x-y plane of the glass outlet (4).

Figure 4a and Figure 4b show the simulated concentration of a marker species originating from the free surface of the glass melt in a drawing head according to this disclosure for, respectively, a mirror plane in the x-z direction, and the x-y plane of the glass outlet (4).

Figure 5a and Figure 5b show the simulated concentration of a marker species originating from the drawing needle in a drawing head according to this disclosure for, respectively, a mirror plane in the x-z direction, and the x-y plane of the glass outlet (4).

Figures 6a, 6b and 6c show the simulated concentration of a marker species originating from the free surface of the glass melt in a drawing head according to this disclosure for, respectively, variations in the vertical distance c at a constant total height h (Figure 6a: $H_E$), variations in the filling height of the glass melt $h_{melt}$ between a glass melt level and a central axis of the glass inlet (Figure 6b: GS), and variations of the vertical distance v of the head overflow (Figure 6c: $H_{Ü}$).

Figures 7a, 7b and 7c show the simulated concentration of a marker species originating from the drawing needle in a drawing head according to this disclosure for, respectively, variations in the vertical distance *c* at a constant total height *h* (Figure 7a: $H_E$), variations in the filling height of the glass melt $h_{melt}$ between a glass melt level and a central axis of the glass inlet (Figure 7b: GS), and variations of the vertical distance *v* of the head overflow (Figure 7c: $H_{Ü}$).

Detailed Description of the Figures

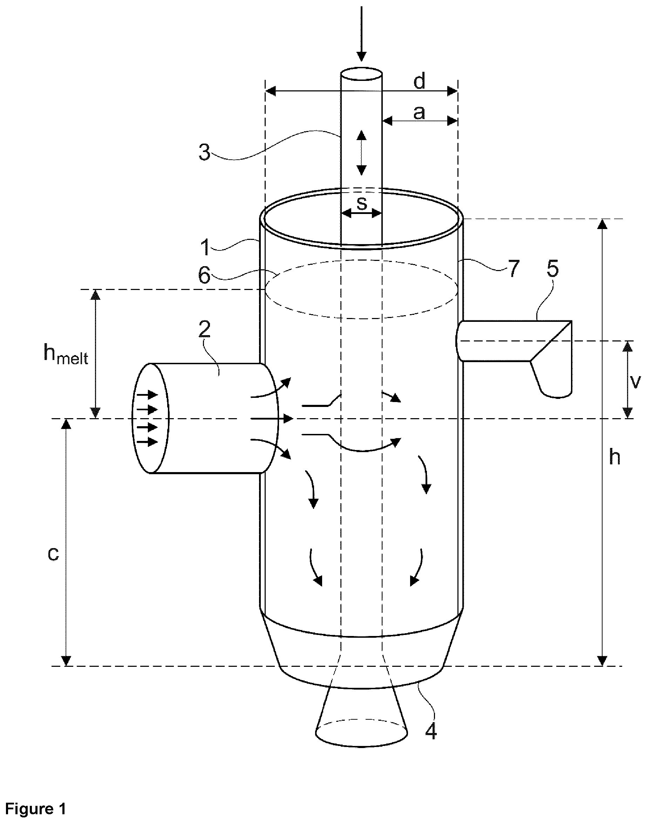

Figure 1 shows a drawing head (1) according to this disclosure, which allows production of glass tubes which are substantially or completely devoid of visually discernible nor palpable streaks, even in the absence of the operation of the head overflow (5). Depending on the type of glass processed and the production parameters, a head overflow (5) may be omitted completely. The glass melt enters the drawing head (1) via the glass inlet (2) and surrounds the shaft of the drawing needle (3). The glass melt leaves the drawing head (1) via the glass outlet (4) and is formed into a glass tube which results from the drawing needle (3). The position of the drawing needle (3) may be adjusted vertically and/or laterally to further control the production of the glass tubes. The glass melt level (6), i.e., the surface of the glass melt, within the drawing head (1) is indicated. The inner wall (7) of the drawing head (1) is indicated and may at least partially comprise a noble metal lining, e.g., platinum or a platinum alloy. Characteristic dimensions of the drawing head (1) are indicated: the total height h, the inner diameter d, the vertical distance v between the central axis of the head overflow (5) and the central axis of the glass inlet (2), the vertical distance c between the glass outlet (4) and the central axis of the glass inlet (2), the filling height of the glass melt $h_{melt}$ between the glass melt level (6) and the central axis of the glass inlet (2), the distance a between the drawing needle (3) and the inner wall (7) of the drawing head (1). Due to the specially adapted geometry of the drawing head (1), the flow conditions during the drawing of the glass tubes are controlled in such a way that any looping streak in the glass melt exclusively results in streaks inside the drawn glass tubes, which streaks do not appear on the outer surface (11) or the inner surface (12) of the glass tubes and which are thus neither visually discernible nor palpable.

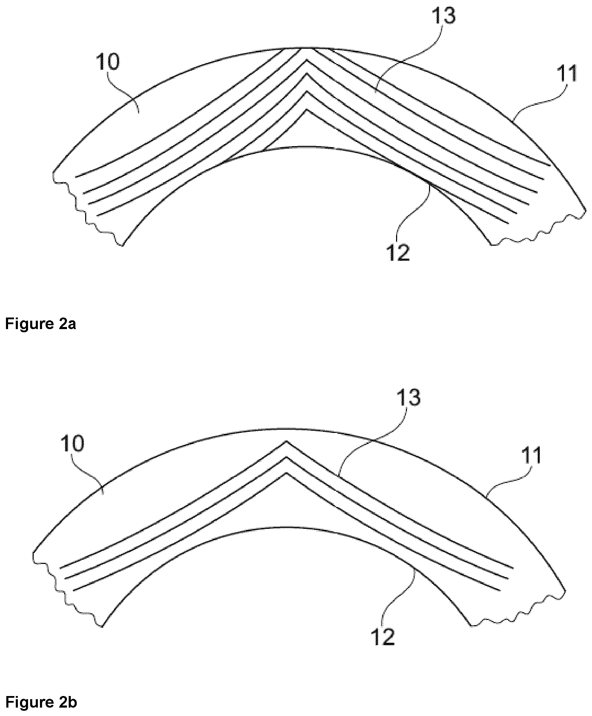

Figure 2a shows the formation and position of streaks (13) in the glass tube (10) which form in a conventional process. The glass tube is surrounded by an outer surface (11) and an inner surface (12). The streaks extend from the inside of the glass tube to the outer surface (11), where they become visible to the naked eye as streaks on the glass tube surface. In some cases, the streaks (13) on the outer surface may also lead to palpable unevenness. Both the visible streaks and the palpable streaks impair the quality of the manufactured products and lead to increased scrap.

Figure 2b shows the formation of the streak pattern in a cross-section of a glass tube (10) manufactured according to the teaching of this disclosure. The streaks are only found inside the tube and do not appear on the outer surface (11) or the inner surface (12) of the glass tubes.

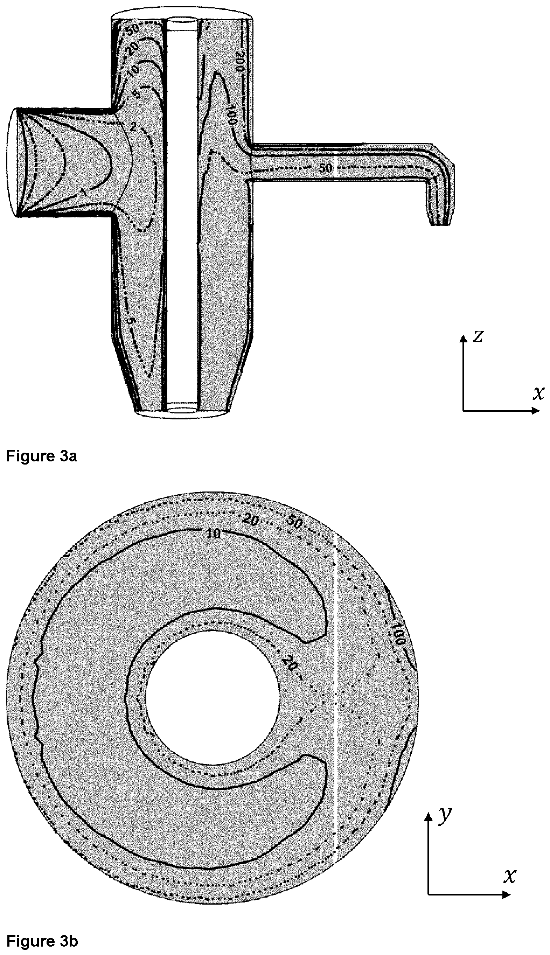

Figure 3a and Figure 3b show the simulated residence time of the glass melt (in minutes) in a drawing head according to this disclosure for, respectively, a mirror plane in the x-z direction, and the x-y plane of the glass outlet (4). Simulations were performed according to the 'Methods' section of this disclosure. Figure 3a and Figure 3b hence show the space- and time-resolved distribution of the glass melt passing through the drawing head during a process of manufacturing glass tubes run under typical process conditions.

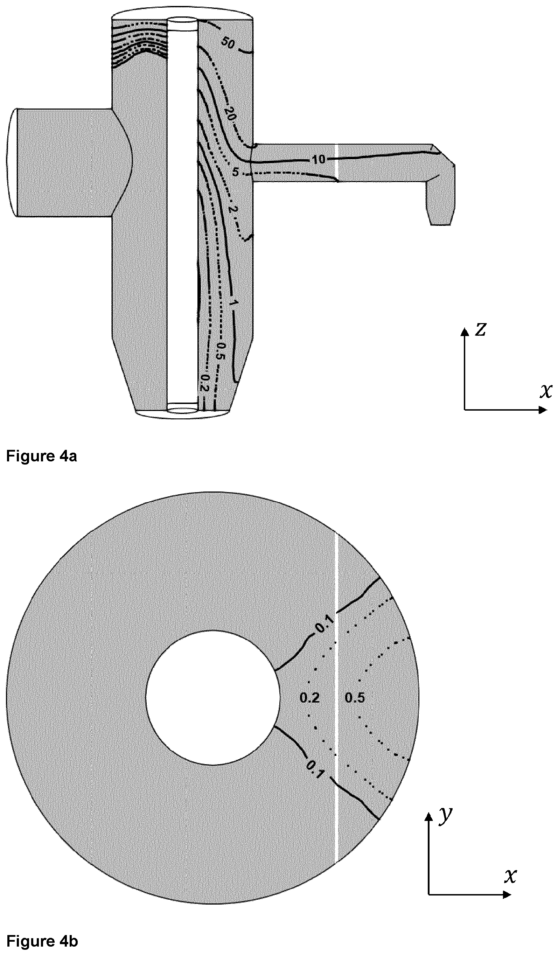

Figure 4a and Figure 4b show the simulated concentration of a marker species originating from the free surface of the glass melt in a drawing head according to this disclosure for, respectively, a mirror plane in the x-z direction, and the x-y plane of the glass outlet (4). Simulations were performed according to the 'Methods' section of this disclosure. The simulated concentration of the marker species is indicated in arbitrary units and reflects the space- and time-resolved distribution of said marker species in the glass melt when passing through the drawing head during a process of manufacturing glass tubes run under typical process conditions.

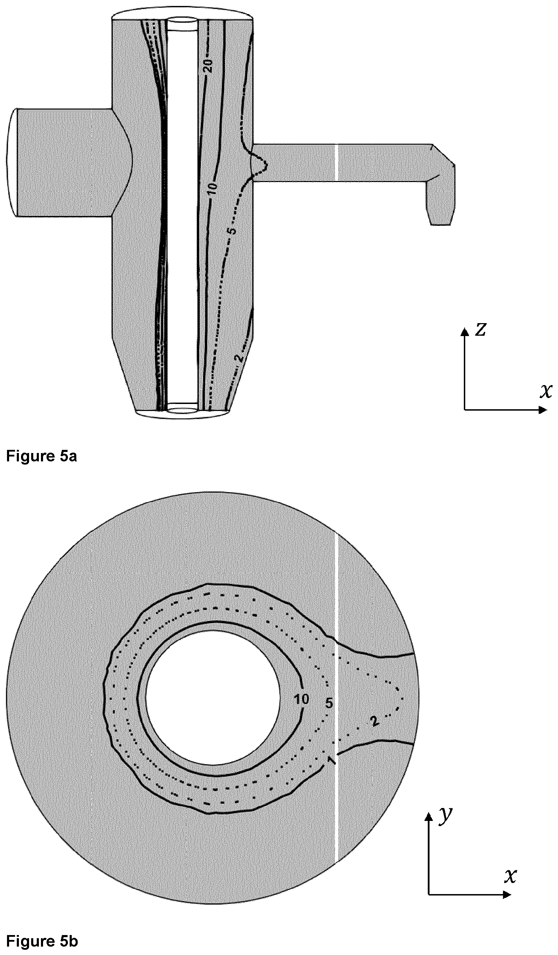

Figure 5a and Figure 5b show the simulated concentration of a marker species originating from the drawing needle in a drawing head according to this disclosure for, respectively, a mirror plane in the x-z direction, and the x-y plane of the glass outlet (4). Simulations were performed according to the 'Methods' section of this disclosure. The simulated concentration of the marker species is indicated in arbitrary units and reflects the space- and time-resolved distribution of said marker species in the glass melt when passing through the drawing head during a process of manufacturing glass tubes run under typical process conditions.

Figures 6a, 6b and 6c show the simulated concentration of a marker species originating from the free surface of the glass melt in a drawing head according to this disclosure for, respectively, variations in the vertical distance *c* at a constant total height *h* (Figure 6a: $H_E$), variations in the filling height of the glass melt $h_{melt}$ between a glass melt level and a central axis of the glass inlet (Figure 6b: GS), and variations of the vertical distance v of the head overflow (Figure 6c: $H_{Ü}$). Simulations were performed according to the 'Methods' section of this disclosure and display the angle-resolved concentration of the marker species at the outer surface of the emanating glass tube in the x-y plane of the glass outlet (4). The simulations indicate a strong inverse correlation for a mathematically positive vertical distance $v$ of the head overflow ($H_{\ddot{U}}$) and the quantitative presence of the said marker species at the detected position. The simulations indicate a moderate inverse correlation for a mathematically positive vertical distance c at a constant total height $h$ ($H_E$) and the quantitative presence of the said marker species at the detected position. The simulations indicate that a lower glass melt level (GS) slightly increases the quantitative presence of the said marker species at the detected position.

Figures 7a, 7b and 7c show the simulated concentration of a marker species originating from the drawing needle in a drawing head according to this disclosure for, respectively, variations in the vertical distance c at a constant total height $h$ (Figure 7a: $H_E$), variations in the filling height of the glass melt $h_{melt}$ between a glass melt level and a central axis of the glass inlet (Figure 7b: GS), and variations of the vertical distance $v$ of the head overflow (Figure 7c: $H_{\ddot{U}}$). Simulations were performed according to the 'Methods' section of this disclosure and display the angle-resolved concentration of the marker species at the outer surface of the emanating glass tube in the x-y plane of the glass outlet (4). The simulations indicate a strong inverse correlation for a mathematically positive vertical distance v of the head overflow ($H_{\ddot{U}}$) and the quantitative presence of the said marker species at the detected position. The simulations indicate an inverse correlation for a mathematically positive vertical distance $c$ at a constant total height $h$ ($H_E$) and the quantitative presence of the said marker species at the detected position. The simulations indicate that a lower glass melt level (GS) increases the quantitative presence of the said marker species at the detected position.

Methods

**Simulations**

The formation of the looping streak was assessed by a simulation of the glass melt flow in the drawing head for varying geometries using the CFD-software package FLUENT. The underlying mathematical model assumes an isothermal Stokes flow of the glass melt. The mass flow of the glass melt at the inlet into the drawing head and the portion x of the mass flow which is drained via the head overflow are prescribed. The free surface of the glass melt in the drawing head is idealized as a fixed wall with zero shear stresses. Its position is prescribed according to the theoretical glass level of the furnace. No slip condition applies to the inner walls of the drawing head.

The assumptions of this mathematical model are justified by typical parameter ranges of the Vello process. The model predicts similar velocity fields for geometrically similar drawing heads. The actual velocity magnitude scales with $\frac{\dot{m}}{\rho L^2}$, where $\dot{m}$ is the total glass flow rate, $\rho$ is the glass density and $L$ is a characteristic length scale of the head geometry, e.g. the inlet diameter. A single model result is thus representative for the whole range of similar drawing head dimensions, mass flow rates and material properties of the glass.

The transport of two marker species was simulated in the model system: The first species qualitatively models a contamination of the glass resulting from the contact with the drawing needle by imposing a constant species source $j_n$ on the needle surface. The temperature of the drawing needle is lower than the temperature of the glass melt. The second species qualitatively models a contamination of the glass at the free surface, for example by evaporation effects, by imposing a constant species source $j_s$ on the free surface. The diffusion coefficients $D_n$ and $D_s$ of the marker species were chosen sufficiently small to assess convection-dominated species transport. Consequently, the species concentrations scale with $\frac{j_n \cdot L}{D_n}$ and $\frac{j_s \cdot L}{D_s}$ for similar drawing head sizes.

The identities $\rho \cdot \frac{Dc_N}{Dt} = D_N \cdot \Delta c_N$ and $\rho \cdot \frac{Dc_S}{Dt} = D_S \cdot \Delta c_S$ were applied, using the boundary conditions $c_N = c_s = 0$ for the inlet, $D_N \cdot \frac{dc_N}{dn} = -j_N \left[\frac{kg}{m^2 s}\right]$ for the needle, and $D_S \cdot \frac{dc_S}{dn} = -j_S \left[\frac{kg}{m^2 s}\right]$ for the surface.

The model system thus allows comparing different drawing head geometries with respect to their propensity of looping streak formation. For this relative comparison, the actual values of the sources $j_n$ and $j_s$ are not relevant. The scaled species sources (shown in Figures 6a to 6c for the marker species at the free surface, and Figures 7a to 7c for the marker species at the drawing needle) were set as $\frac{j_n \cdot L}{D_n} = \frac{j_s \cdot L}{D_s} = 115$. The drain flow portion, i.e., the portion which leaves the drawing head via the head overflow, was set as x = 0.042.

The following conditions were established in the simulations: $\dot{m}$ = 580 kg h$^{-1}$, $p$ = 2290 kg m$^3$, $\eta$ = 5000 Pa·s, $L$ = 0.115 m for the inlet diameter, and $Re$ = 2.8 10$^{-4}$ << 1. The Stokes approximation was thus sufficient, i.e., 0 = $-\nabla^*\tilde{p}^* + \Delta\vec{u}^*$. The provided similarity solution holds for scaled geometries, in which the mass flow and/or the viscosity can be changed, provided that $Re$ << 1 and provided that x = *const.*

Reference numerals

| | |
|---|---|
| 1 | drawing head |
| 2 | glass inlet |
| 3 | drawing needle |
| 4 | glass outlet |
| 5 | head overflow |
| 6 | glass melt level |
| 7 | inner wall |
| 10 | glass tube |
| 11 | outer surface of the glass tube |
| 12 | inner surface of the glass tube |
| 13 | streak in the glass tube |
| h | total height |
| $h_{melt}$ | filling height of the glass melt, i.e. distance between glass melt level and central axis of glass inlet |
| d | inner diameter |
| s | shaft diameter |
| c | distance between glass outlet and central axis of the glass inlet |
| a | distance between shaft and inner wall |
| v | vertical distance between central axis of head overflow and a central axis of glass inlet |

**Claims**

1. Drawing head (1) for producing a glass tube, wherein the drawing head (1) comprises a glass inlet (2) for receiving a glass melt and a glass outlet (4) for discharging the glass melt, the drawing head (1) having a total height $h$ and an inner diameter d, **characterized by** one or more of the following features:

   - the drawing head (1) further comprising a head overflow (5), wherein a central axis of the head overflow (5) is arranged vertically above a central axis of the glass inlet (2) by a vertical distance $v$, **characterized in that** a ratio $v/h$ is at least 0.05/1, or at least 0.1/1;
   - the drawing head (1) having a vertical distance c between the glass outlet (4) and a central axis of the glass inlet (2), **characterized in that** a ratio $c/h$ is from 0.2/1 to 0.8/1, more preferably the ratio $c/h$ is from 0.4/1 to 0.6/1 or alternatively from 0.2/1 to 0.4/1.

2. Drawing head (1) according to claim 1, wherein a ratio h/d is from 2/1 to 7/1, more preferably the ratio h/d is from 3/1 to 4.5/1.

3. Drawing head (1) according to claim 1 or 2, having an inner diameter of the glass inlet (2) $d_{i,inlet}$ and having an inner diameter of the head overflow (5) $d_{i,overflow}$, wherein a ratio of $d_{i,in-let}/d_{i,overflow}$ is between 5/1 and 1.5/1, more preferably the ratio $d_{i,inlet}/d_{i,overflow}$ is between 3/1 and 2/1.

4. Drawing head (1) according to any one of claims 1 to 3, **characterized in that** the inner diameter d is between 120 and 400 mm, preferably the inner diameter d is between 150 and 300 mm.

5. Drawing head (1) according to any one of claims 1 to 4, the drawing head (1) further comprising an inner wall (7), **characterized in that** the inner wall (7) of the drawing head (1), which during use contacts a glass melt, at least partially comprises a noble metal lining.

6. Drawing head (1) according to claim 5, **characterized in that** the noble metal lining comprises platinum or a platinum alloy.

7. Drawing head (1) according to claim 5 or claim 6, **characterized in that** the noble metal lining comprises connections for electrical heating.

8. Apparatus for producing a glass tube comprising a drawing head (1) according to any one of claims 1 to 7 and a drawing needle (3).

9. Apparatus according to claim 8, **characterized in that** a distance a between the drawing needle (3) and an inner wall (7) of the drawing head (1) is in the range from 40 to 300 mm, more preferably the distance a is in the range from 50 to 150 mm.

10. Process for producing a glass tube via a drawing process, comprising the step of passing a glass melt through an apparatus according to claim 8 or claim 9, wherein the process optionally comprises a subsequent hot forming step.

11. Process according to claim 10, wherein a filling height of the glass melt $h_{melt}$ between a glass melt level (6) and a central axis of the glass inlet (2) is set such that a ratio $h_{melt}/h$ of at least 0.1/1, or at least 0.2/1 is provided.

12. Process according to claims 10 to 11, wherein the drawing head (1) further comprises a head overflow (5), **characterized in that** an amount of glass melt drawn off via the head overflow (5) is less than 10%, preferably less than 5%, of the amount of glass melt fed into the drawing head (1) via the glass inlet (2).

13. Process according to claim 12, **characterized in that** an amount of glass melt discharged via the glass outlet (4) for drawing glass tubes is substantially equal to an amount of glass melt received via the glass inlet (2).

**14.** Process according to any one of claims 10 to 13, **characterized in that** a process temperature of the glass melt in the drawing head (1) is substantially set, preferably controlled, by electrical heating of the noble metal lining of the drawing head (1).

**15.** Process according to any one of claims 12 to 14, wherein a filling height of the glass melt $h_{melt}$ between a glass melt level (6) and a central axis of the glass inlet (2) is set such that a ratio $h_{melt}/h$ of at least 0.1/1, or at least 0.2/1 is provided, with the proviso that the glass melt level (6) is between $h - 100$ mm and $h$, with respect to the total height $h$ of the drawing head (1).


**Patentansprüche**

**1.** Ziehkopf (1) zur Herstellung eines Glasrohrs, wobei der Ziehkopf (1) einen Glaseinlass (2) zur Aufnahme einer Glasschmelze und einen Glasauslass (4) zur Ausgabe der Glasschmelze umfasst, wobei der Ziehkopf (1) eine Gesamthöhe h und einen Innendurchmesser d aufweist, **gekennzeichnet durch** eines oder mehrere der folgenden Merkmale:

> - der Ziehkopf (1) umfasst ferner einen Kopfüberlauf (5), wobei eine Mittelachse des Kopfüberlaufs (5) mit einem vertikalen Abstand v vertikal über einer Mittelachse des Glaseinlasses (2) angeordnet ist, **dadurch gekennzeichnet, dass** ein Verhältnis v/h wenigstens 0,05/1 oder wenigstens 0,1/1 beträgt;
> - der Ziehkopf (1) weist einen vertikalen Abstand c zwischen dem Glasauslass (4) und einer Mittelachse des Glaseinlasses (2) auf, **dadurch gekennzeichnet, dass** ein Verhältnis c/h von 0,2/1 bis 0,8/1 beträgt, bevorzugter das Verhältnis c/h von 0,4/1 bis 0,6/1 oder alternativ von 0,2/1 bis 0,4/1 beträgt.

**2.** Ziehkopf (1) nach Anspruch 1, wobei ein Verhältnis h/d von 2/1 bis 7/1 beträgt, bevorzugter das Verhältnis h/d von 3/1 bis 4,5/1 beträgt.

**3.** Ziehkopf (1) nach Anspruch 1 oder 2 mit einem Innendurchmesser des Glaseinlasses (2) $d_{i,Einlass}$ und mit einem Innendurchmesser des Kopfüberlaufs (5) $d_{i,Überlauf}$, wobei ein Verhältnis von $d_{i,Einlass}/d_{i,Überlauf}$ zwischen 5/1 und 1,5/1 beträgt, bevorzugter das Verhältnis $d_{i,Einlass}/d_{i,Überlauf}$ zwischen 3/1 und 2/1 beträgt.

**4.** Ziehkopf (1) nach einem der Ansprüche 1 bis 3, **dadurch gekennzeichnet, dass** der Innendurchmesser d zwischen 120 und 400 mm beträgt, bevorzugter der Innendurchmesser d zwischen 150 und 300 mm beträgt.

**5.** Ziehkopf (1) nach einem der Ansprüche 1 bis 4, wobei der Ziehkopf (1) ferner eine Innenwand (7) umfasst, **dadurch gekennzeichnet, dass** die Innenwand (7) des Ziehkopfs (1), die in Verwendung mit einer Glasschmelze in Kontakt steht, wenigstens zum Teil eine Edelmetallauskleidung umfasst.

**6.** Ziehkopf (1) nach Anspruch 5, **dadurch gekennzeichnet, dass** die Edelmetallauskleidung Platin oder eine Platinlegierung umfasst.

**7.** Ziehkopf (1) nach Anspruch 5 oder Anspruch 6, **dadurch gekennzeichnet, dass** die Edelmetallauskleidung Anschlüsse für elektrische Heizung umfasst.

**8.** Vorrichtung zur Herstellung eines Glasrohrs, die einem Ziehkopf (1) nach einem der Ansprüche 1 bis 7 und eine Ziehnadel (3) umfasst.

**9.** Vorrichtung nach Anspruch 8, **dadurch gekennzeichnet, dass** ein Abstand a zwischen der Ziehnadel (3) und einer Innenwand (7) des Ziehkopfs (1) in dem Bereich von 40 bis 300 mm liegt, bevorzugter der Abstand a in dem Bereich von 50 bis 150 mm liegt.

**10.** Verfahren zur Herstellung eines Glasrohrs über ein Ziehverfahren, umfassend den Schritt des Führens einer Glasschmelze durch eine Vorrichtung nach Anspruch 8 oder 9, wobei das Verfahren gegebenenfalls einen nachfolgenden Warmformschritt umfasst.

**11.** Verfahren nach Anspruch 10, wobei eine Füllhöhe der Glasschmelze $h_{Schmelze}$ zwischen einem Glasschmelzeniveau (6) und einer Mittelachse des Glaseinlasses (2) so eingestellt wird, dass ein Verhältnis $h_{Schmelze}/h$ von wenigstens 0,1/1 oder wenigstens 0,2/1 bereitgestellt wird.

**12.** Verfahren nach Ansprüchen 10 bis 11, wobei der Ziehkopf (1) ferner einen Kopfüberlauf (5) umfasst, **dadurch gekennzeichnet, dass** eine über den Kopfüberlauf (5) abgezogene Menge an Glasschmelze kleiner als 10 %, vorzugsweise kleiner als 5 %, der über den Glaseinlass (2) dem Ziehkopf (1) zugeführten Menge an Glasschmelze ist.

**13.** Verfahren nach Anspruch 12, **dadurch gekennzeichnet, dass** eine über den Glasauslass (4) zum Ziehen von Glasrohren ausgegebene Menge an Glasschmelze im Wesentlichen gleich einer über den Glaseinlass (2) aufgenommenen Menge an Glasschmelze ist.

**14.** Verfahren nach einem der Ansprüche 10 bis 13, **dadurch gekennzeichnet, dass** eine Prozesstemperatur der Glasschmelze in dem Ziehkopf (1) im Wesentlichen durch elektrisches Heizen der Edelmetallauskleidung des Ziehkopfs (1) eingestellt, vorzugsweise gesteuert, wird.

15. Verfahren nach einem der Ansprüche 12 bis 14, wobei eine Füllhöhe der Glasschmelze $h_{Schmelze}$ zwischen einem Glasschmelzeniveau (6) und einer Mittelachse des Glaseinlasses (2) so eingestellt wird, dass ein Verhältnis $h_{Schmelze}/h$ von wenigstens 0,1/1 oder wenigstens 0,2/1 bereitgestellt wird, mit der Maßgabe, dass das Glasschmelzeniveau (6) zwischen h - 100 mm und h, bezogen auf die Gesamthöhe h des Ziehkopfs (1), beträgt.

**Revendications**

1. Tête d'étirage (1) destinée à fabriquer un tube de verre, la tête d'étirage (1) comprenant une entrée de verre (2) pour recevoir une masse fondue de verre et une sortie de verre (4) pour décharger la masse fondue de verre, la tête d'étirage (1) ayant une hauteur totale h et un diamètre intérieur d, **caractérisée par** une ou plusieurs des caractéristiques suivantes :

    - la tête d'étirage (1) comprenant en outre un trop-plein de tête (5), un axe central du trop-plein de tête (5) étant disposé verticalement au-dessus d'un axe central de l'entrée de verre (2) d'une distance verticale v, **caractérisée en ce qu'**un rapport v/h vaut au moins 0,05/1, ou au moins 0,1/1 ;
    - la tête d'étirage (1) présentant une distance verticale c entre la sortie de verre (4) et un axe central de l'entrée de verre (2), **caractérisée en ce qu'**un rapport c/h va de 0,2/1 à 0,8/1, mieux encore le rapport c/h va de 0,4/1 à 0,6/1 ou en variante de 0,2/1 à 0,4/1.

2. Tête d'étirage (1) selon la revendication 1, dans laquelle un rapport h/d va de 2/1 à 7/1, mieux encore le rapport h/d va de 3/1 à 4,5/1.

3. Tête d'étirage (1) selon la revendication 1 ou 2, présentant un diamètre intérieur de l'entrée de verre (2) $d_{i,inlet}$ et présentant un diamètre intérieur du trop-plein de tête (5) $d_{i,overflow}$, dans laquelle un rapport $d_{i,inlet}/d_{i,overflow}$ se situe entre 5/1 et 1,5/1, mieux encore le rapport $d_{i,inlet}/d_{i,overflow}$ se situe entre 3/1 et 2/1.

4. Tête d'étirage (1) selon l'une quelconque des revendications 1 à 3, **caractérisée en ce que** le diamètre intérieur d se situe entre 120 et 400 mm, de préférence le diamètre intérieur d se situe entre 150 et 300 mm.

5. Tête d'étirage (1) selon l'une quelconque des revendications 1 à 4, la tête d'étirage (1) comprenant en outre une paroi intérieure (7), **caractérisée en ce que** la paroi intérieure (7) de la tête d'étirage (1), qui à l'usage est en contact avec une masse de verre fondue, comprend au moins partiellement un revêtement de métal noble.

6. Tête d'étirage (1) selon la revendication 5, **caractérisée en ce que** le revêtement de métal noble comprend du platine ou un alliage de platine.

7. Tête d'étirage (1) selon la revendication 5 ou la revendication 6, **caractérisée en ce que** le revêtement de métal noble comprend des branchements pour un chauffage électrique.

8. Appareil destiné à fabriquer un tube de verre comprenant une tête d'étirage (1) selon l'une quelconque des revendications 1 à 7 et une aiguille d'étirage (3).

9. Appareil selon la revendication 8, **caractérisé en ce qu'**une distance a entre l'aiguille d'étirage (3) et une paroi intérieure (7) de la tête d'étirage (1) est comprise entre 40 et 300 mm, mieux encore la distance a est comprise entre 50 et 150 mm.

10. Procédé destiné à fabriquer un tube de verre par un procédé d'étirage, comprenant l'étape de passage d'une masse fondue de verre à travers un appareil selon la revendication 8 ou la revendication 9, le procédé comprenant éventuellement une étape ultérieure de formage à chaud.

11. Procédé selon la revendication 10, dans lequel une hauteur de remplissage de la masse fondue de verre $h_{melt}$ entre un niveau de masse fondue de verre (6) et un axe central de l'entrée de verre (2) est réglée de telle sorte qu'un rapport $h_{melt}/h$ d'au moins 0,1/1 ou d'au moins 0,2/1 est obtenu.

12. Procédé selon les revendications 10 à 11, dans lequel la tête d'étirage (1) comprend en outre un trop-plein de tête (5), **caractérisé en ce qu'**une quantité de masse fondue de verre évacuée par le trop-plein de tête (5) représente moins de 10 %, de préférence moins de 5 % de la quantité de masse fondue de verre introduite dans la tête d'étirage (1) par l'entrée de verre (2).

13. Procédé selon la revendication 12, **caractérisé en ce qu'**une quantité de masse fondue de verre déchargée par la sortie de verre (4) pour étirer des tubes de verre est sensiblement égale à une quantité de masse fondue de verre reçue par l'entrée de verre (2).

**14.** Procédé selon l'une quelconque des revendications 10 à 13, **caractérisé en ce qu'**une température de procédé de la masse fondue de verre dans la tête d'étirage (1) est largement réglée, de préférence régulée, par chauffage électrique du revêtement de métal noble de la tête d'étirage (1).

**15.** Procédé selon l'une quelconque des revendications 12 à 14, dans lequel une hauteur de remplissage de la masse fondue de verre $h_{melt}$ entre un niveau de masse fondue de verre (6) et un axe central de l'entrée de verre (2) est réglée de telle sorte qu'un rapport $h_{melt}/h$ d'au moins 0,1/1 ou d'au moins 0,2/1 est obtenu, à condition que le niveau de masse fondue de verre (6) se situe entre h - 100 mm et h, par rapport à la hauteur totale h de la tête d'étirage (1).

Figure 1

Figure 2a

Figure 2b

**Figure 3a**

**Figure 3b**

**Figure 4a**

**Figure 4b**

**Figure 5a**

**Figure 5b**

**Figure 6a**

**Figure 6b**

**Figure 6c**

Figure 7a

Figure 7b

Figure 7c

**EP 4 574 780 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008009811 A1
- US 20170320766 A1
- US 20170341966 A1
- CN 110255864 A
- DE 10127142 C1